# FASCICULE DE BREVET EUROPEEN

(11) **EP 1 741 940 B1**
(45) Date de publication et mention de la délivrance du brevet: **11.01.2017**
(21) Numéro de dépôt: 06291094.8
(22) Date de dépôt: 03.07.2006
(51) Int. Cl.: F16C 19/38, F16C 33/36, F16C 23/08

(54) **Palier à roulements tonneaux**
Tonnenlager
Barrel-shaped bearing

(30) Priorité: 08.07.2005 FR 0507353
(43) Date de publication de la demande: 10.01.2007
(73) Titulaire: Defontaine, 85530 La Bruffière (FR)
(72) Inventeur: Errard, Germain, 44210 Pornic (FR); Jacquemont, Eric, 44190 Clisson (FR); Terve, Daniel, 44230 Saint Sebastien (FR); Chatry, Didier, 85530 La Bruffière (FR)
(74) Mandataire: Novagraaf Technologies

(56) Documents cités:
- EP-A- 0 158 015
- EP-A- 1 519 058
- WO-A-2004/027277
- US-A1- 2003 086 631
- US-A1- 2003 147 751
- US-B1- 6 293 704

## Description

L'invention concerne un palier pivotant de servomoteur.

Un but est de proposer un tel palier pour une pale d'un moyeu de rotor d'une éolienne.

De façon générale, il existe déjà des paliers susceptibles de subir de gros efforts et comprenant :
- au moins une première et une seconde bagues de roulement s'étendant à deux distances radiales différentes par rapport à l'axe de la pale, et montée tournante relativement entre elles, autour de cet axe,
- au moins une série de roulements disposés, suivant un plan radial à cet axe, entre les première et seconde bagues,
- des premiers moyens de fixation de la première bague sur le moyeu de rotor,
- des deuxièmes moyens de fixation de la deuxième bague sur la pale.

En particulier les pales d'éolienne subissent non seulement des efforts importants dans l'axe de la/chaque pale (efforts axiaux), mais également de très importants efforts exercés radialement à l'axe de la pale et du moyeu de rotor (efforts radiaux ou centrifuges).

Les vitesses de rotation, les dimensions toujours croissantes des éoliennes, les efforts imposés par le vent, mais également des efforts liés à l'angle de calage des pales imposent une résistance toujours accrue des paliers.

A cet égard, il est courant que les pales puissent pivoter d'une dizaine de degrés autour de leur axe d'allongement pour favoriser le rendement en fonction de la direction du vent.

Bien que ci-après on ne fasse référence, par simplicité, qu'à des pale(s) et moyeu(s) de rotor, l'invention peut s'appliquer à d'autres appareillages rencontrant les mêmes problèmes (grues, gros engins de chantier...etc).

C'est dans ce contexte qu'un objet de l'invention est d'améliorer la tenue mécanique des paliers, en favorisant leur résistance, en particulier aux efforts radiaux, et leur performance d'ensemble, en particulier pour cette application aux grosses étoliennes.

Une solution proposée selon la revendication 1 consiste en ce que les roulements utilisés soient des roulements tonneaux présentant chacun un axe de rotation, ces axes étant orientés de biais par rapport à l'axe de la pale et disposés suivant un plan radial à ce dernier, entre les première et seconde bagues, l'une au moins de ces bagues étant séparée en au moins deux parties, suivant une surface transversale à l'axe de la pale, pour le montage et/ou le démontage des roulements.

Pour allier résistance, fiabilité, efficacité, et conditions de fabrication et de maintenance performantes, on conseille que, suivant une direction parallèle à l'axe de la pale, le palier comprenne au moins deux séries de tels roulements tonneaux étagés à deux niveaux différents suivant cette direction et dont les axes de rotation sont concourants entre les étages.

Dans ce cas, on conseille aussi, pour les mêmes raisons, et suivant des directions parallèles à l'axe de la pale :
- que la séparation entre (les) deux parties de la bague considérée soit située entre (les) deux étages des séries de roulements,
- que la bague en au moins deux parties présente, respectivement sur l'une et l'autre de ces parties, des premier et second épaulements radiaux de maintien pour les deux séries correspondantes de roulements, ces épaulements présentant chacun, suivant une section contenant l'axe de la pale et passant par un desdits roulements à chaque étage, une surface de portée concave complémentaires d'une surface convexe de ces roulements ou rouleaux, ces premier et second épaulements se raccordant à une partie centrale amincie où se situe la séparation en deux parties de la bague, entre les deux étages desdites séries de roulements,
- et que l'autre bague présente, entre (les) deux étages des séries de roulements, un troisième épaulement intermédiaire radial présentant, suivant ladite section passant, deux surfaces de portée concaves complémentaires de ladite surface convexe de ces roulements, pour compléter leur maintien.

Les axes de rotation concourants des roulements se croiseront en une zone de la partie intermédiaire de moindre épaisseur de ladite bague séparée en au moins deux parties, pour les raisons déjà indiquées.

Particulièrement pour une transmission d'effort optimisée et une sécurité de fixation, on favorisera par ailleurs le fait que le palier comprenne, en outre:
- une pièce de liaison interposée entre la pale et lesdites bague additionnelle et seconde bague et s'étendant, radialement à l'axe de la pale, en regard de celles-ci, l'une au moins de ces bagues étant fixée sur la pièce de liaison sans être fixée sur la pale à laquelle elle sera toutefois liée par l'intermédiaire de cette pièce de liaison, et
- une bague additionnelle de roulement située, radialement à l'axe de la pale, à l'intérieur ou autour des première et deuxième bagues et fixée à la pale.

Dans ces conditions, on favorisera que lesdites bague additionnelle et deuxième bague et la pale soient liées ensemble par une liaison unique par laquelle passera une partie au moins des efforts (de préférence tous) s'exerçant à la fois sur lesdites bague additionnelle et deuxième bague. Cette liaison ne sera donc propre à aucune des bagues.

Particulièrement pour la tenue radiale aux efforts, on conseille en outre qu'un élément ou une partie de retenue soit lié(e) mécaniquement à la pièce de liaison ou au moyeu de rotor, en étant retenu au moins radialement à l'axe de la pale par l'un ou l'autre. Ce moyen de retenue bordera la surface périphérique de ladite bague radialement la plus éloignée de l'axe de la pale.

Il est noté que cette solution concerne une réalisation dans laquelle la « pièce de liaison » précitée est une pièce indépendante et non un élément ou une partie d'une autre pièce. Dans le EP-A-158 015, la pièce 13 des figures 1 à 7 intègre au moins une « partie de liaison » qui s'étend, suivant une direction radiale à l'axe général de rotation, jusqu'en regard de la bague radialement la plus éloignée de cet axe central.

L'utilisation d'une telle « partie de liaison » est ici envisagée. Dans ce cas, on conseille que la bague extérieure ci-dessus considérée présente radialement une épaisseur plus importante vers son extrémité la plus proche de la pale que vers son extrémité la plus proche du moyeu de rotor, cette bague présentant en conséquence une surface périphérique extérieure ayant une génératrice non parallèle, ou non continûment parallèle, à l'axe de la pale.

Les moyens de fixation avec lesdites première bague et bague extérieure seront alors disposés, ensemble, sur cette partie de liaison.

- Bien que formulées suivant des caractéristiques différentes, les deux solutions présentées ci-avant, respectivement avec pièce de liaison et avec partie de liaison, liées intimement au moyeu de rotor ou fixées sur lui, apportent une même solution au problème déjà énoncé d'amélioration de la tenue sous effort des paliers, en particulier radialement à l'axe de rotation de la/chaque pale, sur des éoliennes de plus en plus puissantes donc placées sous contrainte mécanique croissante.

Les caractéristiques qui précèdent, voire celles qui suivent dans la description plus détaillée ci-après, favorisent la fiabilité des éoliennes concernées, ainsi que l'ergonomie de montage/démontage, en offrant une solution performante techniquement et financièrement.

A cet égard, on notera encore qu'on conseille :
- soit que la pale soit exclusivement fixée à la bague intermédiaire et ne soit donc pas fixée directement aux bagues extrêmes,
- soit que l'une au moins parmi lesdites bague additionnelle et seconde bague soit fixée sur la pièce de liaison sans être fixée sur la pale à laquelle elle sera par contre liée par l'intermédiaire de la pièce de liaison précitée.

Dans les exemples illustrés aux dessins annexés :
- la figure 1 est un schéma de face d'une éolienne conforme à l'invention,
- la figure 2 est une vue de côté,
- la figure 3 montre la section III-.III, suivant un plan perpendiculaire aux axes, ici confondus, du moyeu de rotor et de la pale considérée,
- la figure 4 est une variante a priori dégradée de la figure 3,
- la figure 5 schématise, suivant toujours la même section, une solution à trois bagues et deux doubles séries de roulements tonneaux,
- la figure 6 schématise les trois bagues seules de la figure 5, dans une variante a priori préférée,
- la figure 7 schématise les mêmes bagues, suivant la flèche VII,
- les figures 8, 9, 10 montrent, suivant la même section, trois variantes avec pièce de liaison rapportée entre les bagues extrêmes et la pale, et épaulée.

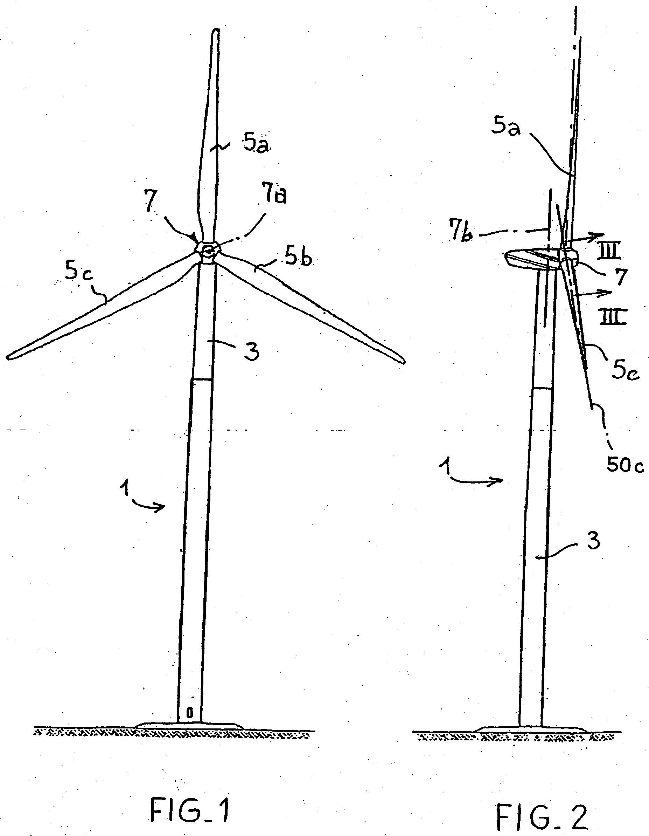

Figures 1 et 2, on voit une éolienne 1 comprenant un mât 3 en tête duquel trois pales 5a, 5b, 5c tournent autour de l'axe horizontal 7a d'un moyeu central 7.

Typiquement, le moyeu 7 est monté lui-même tournant autour d'un axe vertical 7b par rapport au mât 3, pour s'orienter au mieux vis-à-vis du vent.

Chaque pale, et en particulier la pale 5c de la figure 2 peut pivoter de quelques degrés ou dizaines de degrés autour de son axe d'allongement 50c, par rapport au moyeu de rotor 7, de manière à prendre au mieux le vent.

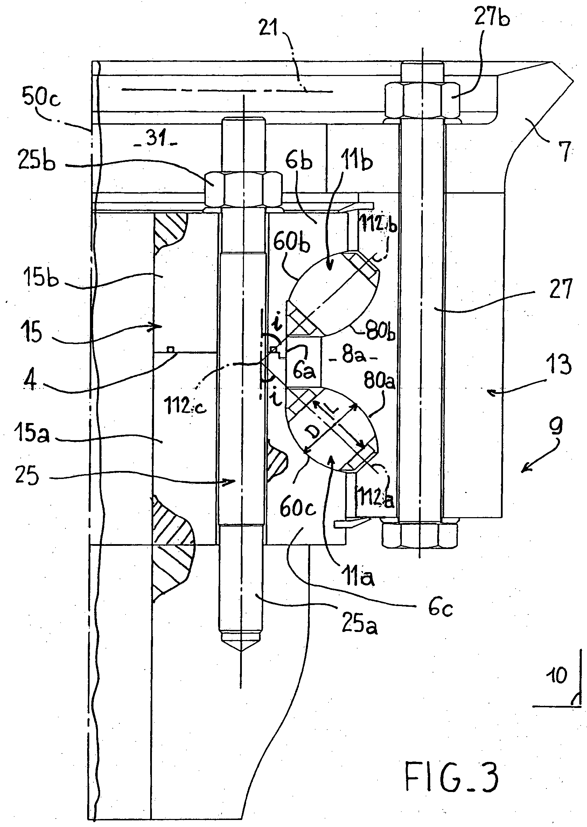

Figure 3, on retrouve en 50c l'axe de la pale 5c et en 7 le moyeu de rotor.

L'orientation angulaire privilégiée de chaque pale, telle que la pale 5c, génère en particulier des efforts radiaux importants, ainsi que des moments de flexion élevés.

Le palier 9 illustré figure 3 comprend deux séries de roulements tonneaux, 11a, 11b, répartis suivant deux anneaux étagés parallèlement à l'axe 50c et interposés entre une bague extérieure 13 et une bague intérieure 15.

On appelle roulement tonneau ce qu'on dénomme ainsi dans FR-A-2 774 315 ou FR-A-2 263 416. Il peut s'agir de roulements à aiguilles.

Les roulements présentent, suivant leur axe de rotation, respectivement 112a, 112b, une longueur L entre leurs deux extrémités planes qui peut être supérieure à leur diamètre maximum D au centre, au sommet leur surface extérieure bombée. Cette surface extérieure de portée est typiquement circulaire, en coupe comme fig.3. Il peut toutefois y avoir plusieurs rayons raccordés. Le rayon moyen de cette surface extérieure de roulement est typiquement plus de 10, voire 20, fois supérieur au diamètre D.

La bague extérieure 13 est en une seule pièce. La bague intérieure 15 comprend au moins deux parties. Celles-ci, 15a, 15b, sont séparées le long d'une ligne de jonction 4 située à l'endroit où la bague 15 de plus petit diamètre (radialement la bague intérieure) présente une partie centrale amincie 6a située, parallèlement à l'axe 50c, entre un premier et un second épaulements radiaux 6b, 6c de maintien pour les roulements 11a, 11b.

En correspondance, la bague extérieure 13 présente, entre les deux étages de ces roulements, un troisième épaulement radial intermédiaire 8a.

Pour maintenir les roulements tonneaux, tant le troisième épaulement 8a que les premier et second épaulements 6b, 6c présentent chacun, dans le plan de coupe 10 de cette figure (qui est le même sur les autres figures vues en section), des surfaces de portée concaves, telles que 80a, 80b pour le troisièmes épaulement 8a ; voir également surfaces de portée concaves 60b, 60c pour les premier et second épaulements radiaux 6b, 6c.

Ces surfaces de portée concaves des pistes de roulement pour les rouleaux-tonneaux sont des tores ou toroïdales ou autrement dit « asphériques ».

Toutes ces surfaces sont complémentaires des surfaces convexes de roulement des deux séries 11a, 11b.

Favorablement, elles détermineront donc des pistes à surface de portée en barrique, ou tonneau. Figure 3, comme sur les autres figures en coupe, les surfaces de portée ont une courbure constante au contact des roulements et définissent, avec eux, des portions de sphère (voir 80a, 80b ; 60b, 60c).

Les axes de rotation, respectivement 112a et 112b, des deux roulements tonneaux illustrés figure 3, qui définissent donc une orientation permanente de rotation de biais des rouleaux, par rapport à l'axe 50c, sont concourants à l'endroit de la partie intermédiaire 6a de moindre épaisseur de la bague intérieure 15, ce qui est favorable aux montages, démontages et tenues aux efforts, notamment radiaux, d'autant que c'est la bague intérieure 15 qui est en plusieurs parties, la zone de convergence 112c des deux axes de rotation étant situés à proximité immédiate de la surface de jonction 4. Sur cette figure comme sur les autres, l'angle commun d'inclinaison i des axes de rotation est ici entre 15° et 70° par rapport à une parallèle à l'axe 50c, et de préférence 20° à 45°.

De part et d'autre des roulements, les bagues 13, 15 sont fixées respectivement au moyeu de rotor 7 et à la pale 5c.

Les boulons, avec ou sans tête, respectivement 27 et 25, assurent les fixations précitées, parallèlement à l'axe 50c, à deux distances radiales différentes de cette axe, suivant la direction 21.

La tige filetée à pans de serrage de chaque moyen de fixation 27 coopère avec un écrou 27a ; de même pour l'écrou de serrage 25a du moyen de fixation 25, à ceci près que l'autre extrémité filetée 25a est vissée directement dans le corps de l'emplanture de la pale 5c.

Ainsi, les écrous 25b, 27b sont accessibles par l'intérieur creux 31 du moyeu de rotor 7.

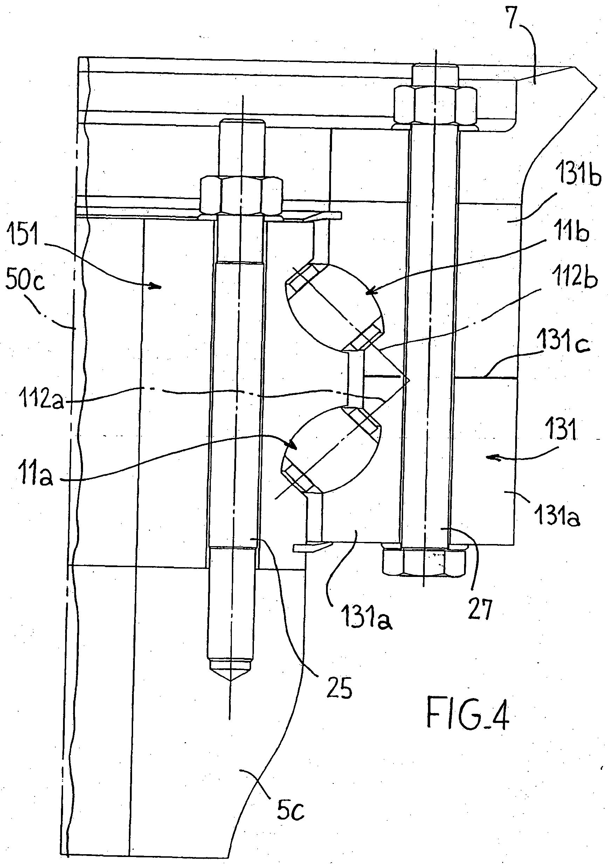

Figure 4, on voit une solution a priori mécaniquement moins favorable dans laquelle la bague intérieure 151 est en une seule pièce, tandis que la bague extérieure 131 est en deux parties 131a, 131b, avec la séparation radiale 131c entre les deux étages de roulements tonneaux 11a, 11b dont les axes de rotation 110a, 110b sont maintenant concourants vers l'extérieur, du côté de la bague 13, sensiblement au niveau dudit plan de joint 131c.

Pour le reste, on trouve essentiellement les caractéristiques présentées en liaison avec la figure 3.

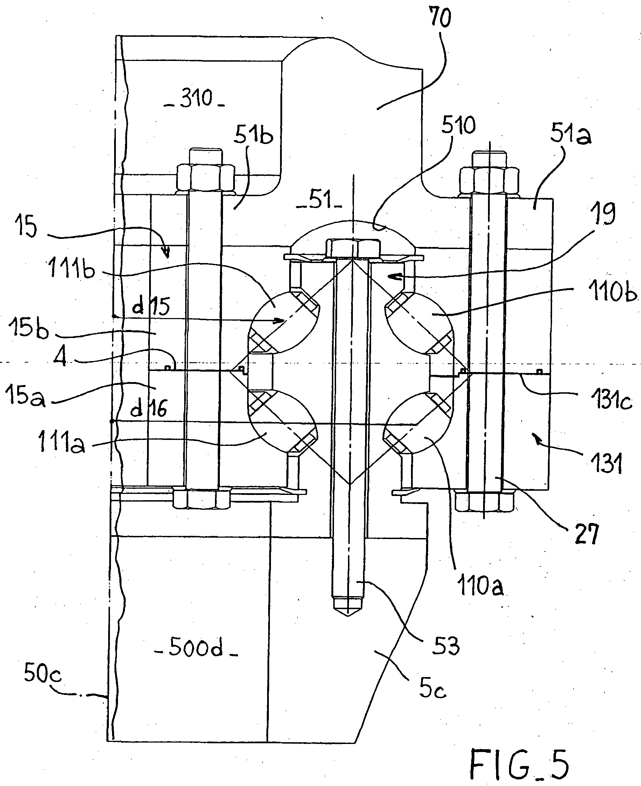

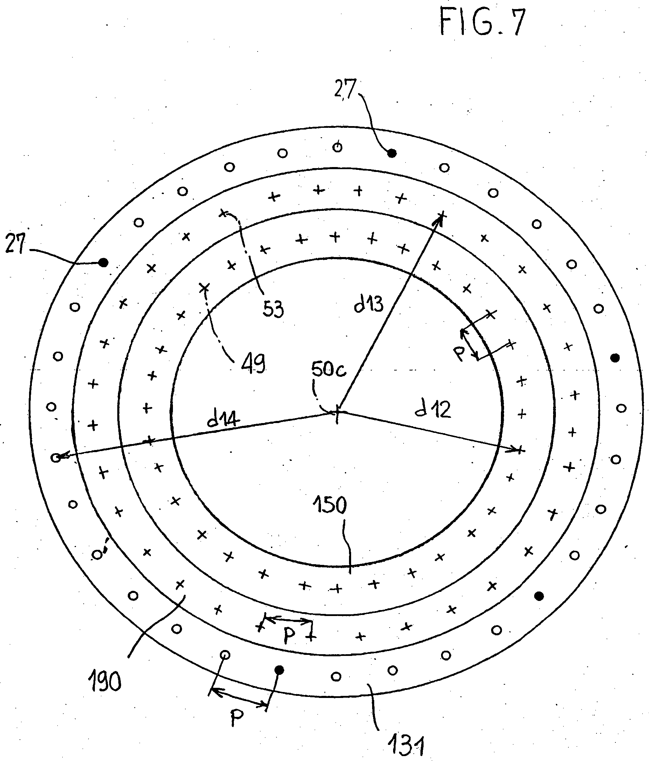

Figure 5, le palier comprend une bague extérieure 131 en deux parties, une bague intérieure 15 également en deux parties et une bague intermédiaire 19. Les trois bagues sont concentriques par rapport à l'axe 50c ; voir fig.7. Sur cette figure (comme d'ailleurs sur les suivantes) il y a donc une bague additionnelle par rapport aux solutions précédentes.

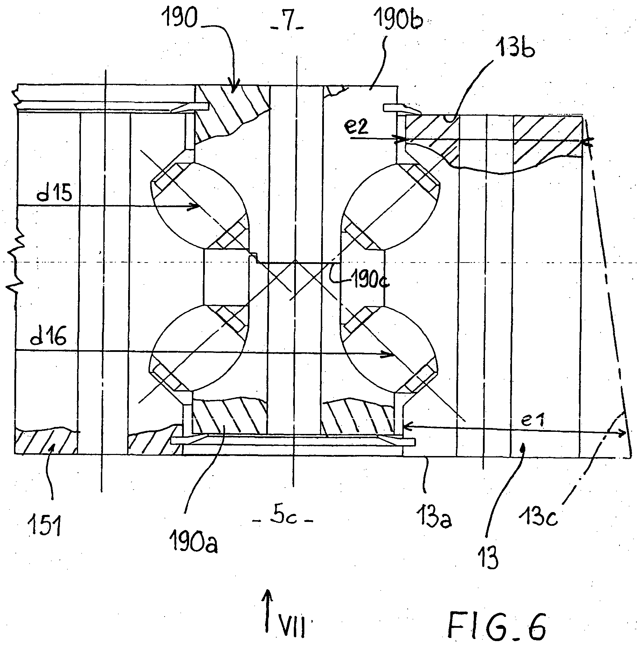

Pour les mêmes raisons que précédemment concernant la bague 13 en plusieurs parties, la solution de la fig.6 est préférée.

La pale d'éolienne 5c présente un diamètre légèrement plus important que dans le cas des figures 3 et 4.

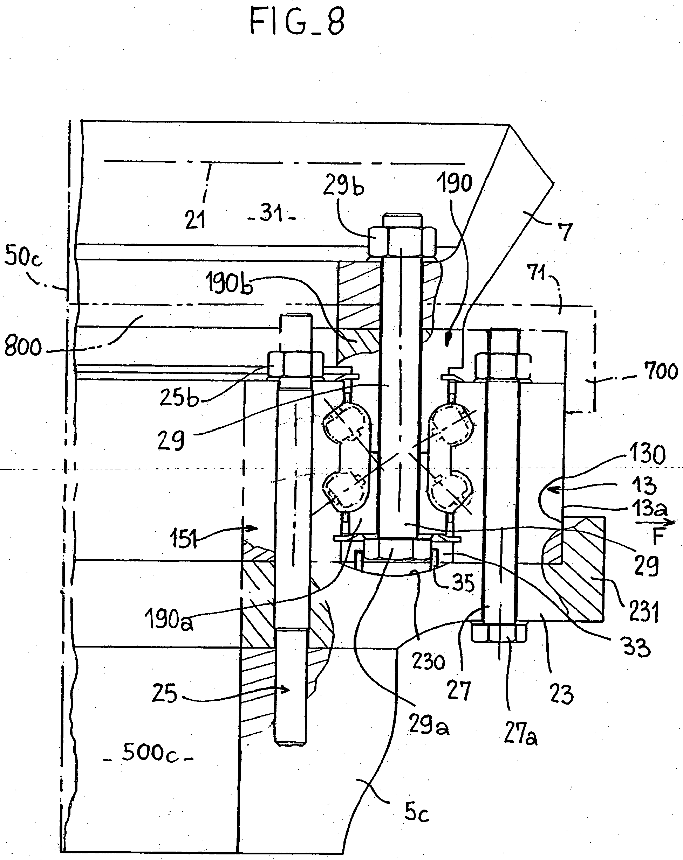

Les diamètres, par rapport à l'axe 50c, où sont fixées ces bagues sont différents entre eux; voir d12, d13, d14 figure 7 où on a d'ailleurs illustré ces fixations : à chaque pas P, on trouve pour chaque bague une fixation soit à la pale, soit au moyeu, et ce à un même diamètre. Ce principe s'applique aux autres cas, notamment fig.8 et suivantes. Figure 7, les roulements ne sont pas montrés.

Figure 5, la bague intermédiaire 19 est vissée dans l'emplanture de la pale 5c, tandis que les deux bagues extrêmes 15,131 sont fixées directement sur la partie de liaison 51 liée intimement au moyeu de rotor 70, le tout ici parallèlement à l'axe d'allongement 50c de la pale 5c.

Cette partie de liaison 51 est intégrée d'une seule pièce avec le moyeu de rotor 70 qu'elle étend, en section à la manière d'un T dont la hampe prolonge axialement (parallèlement à l'axe 50c) le corps du moyeu de rotor et dont la barre reçoit d'un côté, 51a, la fixation serrée des moyens de fixation 27 et, de l'autre, 51b, la fixation serrée des boulons de fixation 49 lesquels débouchent donc d'un côté dans le volume intérieur creux 310 du moyeu de rotor 70 et, à l'extrémité axiale opposée, en face du volume intérieur 500d de la pale 5c dont le diamètre intérieur est légèrement supérieur à celui de la pale des figs.3 et 4.

Face aux moyens (ici boulons) de fixation 53 par lesquels la bague intermédiaire 19 est fixée dans l' emplanture de la pale 5c, la partie de liaison 51 présente une surface 510 concave. Ainsi, la tête de serrage à pans 55 de chaque tige filetée est logée dans une chambre fermée.

Les roulements tonneaux sont ici répartis en deux séries de double roulements étagés avec, à un premier diamètre moyen d15, deux étages 111a, 111b écartés axialement et, à un deuxième diamètre moyen d16, deux autres étages 110a, 110b écartés axialement de la même distance.

A chaque diamètre d15 ou d16, ces roulements tonneaux ont leurs axes de rotation qui sont concourants en une zone des bagues extrêmes 15,131, à proximité des plans de joint intermédiaires, respectivement 4 et 131c.

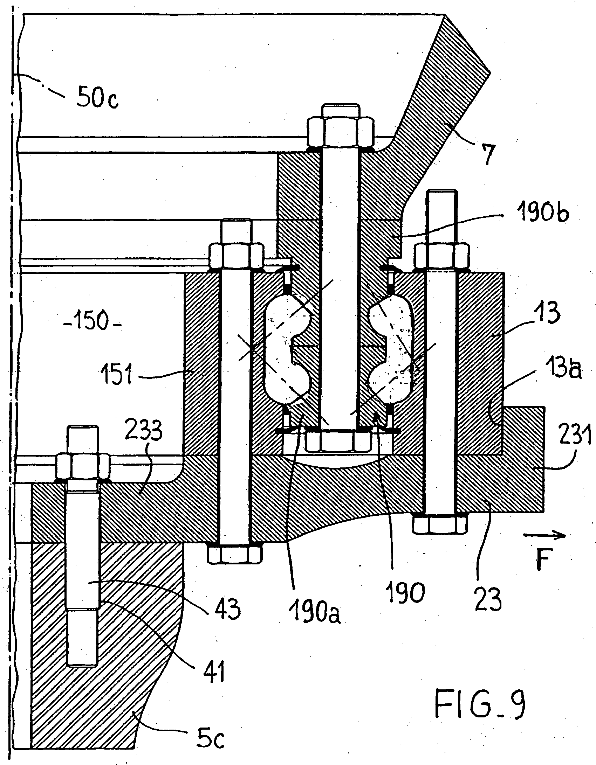

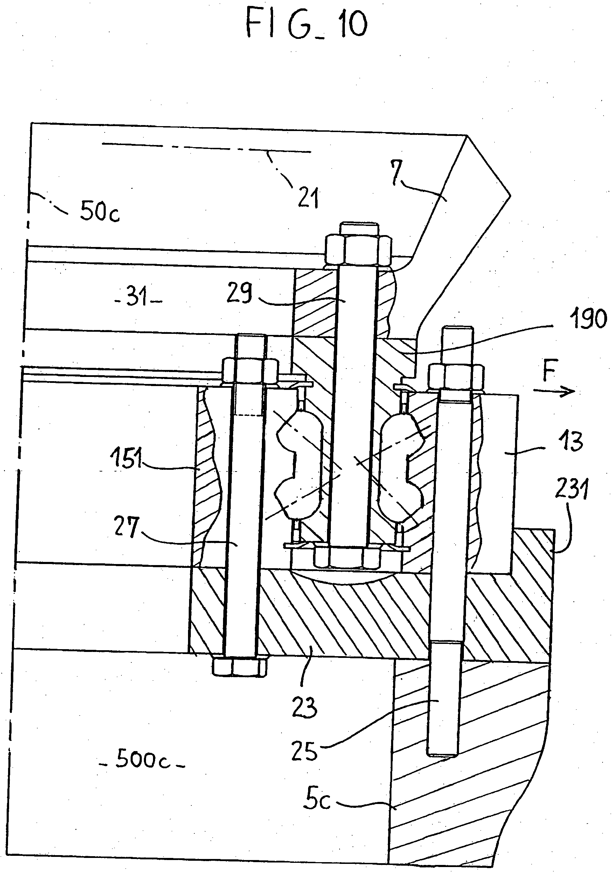

La solution de la fig.6 est préférée en ce qu'en particulier les axes de rotation des mêmes roulements tonneaux 110a, 110b; 111a, 111b convergent tous, de préférence par groupe de deux comme illustré, vers une zone centrale, ici le (à proximité du) plan de joint intermédiaire 190c où se rejoignent les deux parties constitutives 190a, 190b de la bague intermédiaire 190, les bagues radialement extrêmes 13,151 étant alors monoblocs. Cette disposition « en X » des axes de rotation se retrouve figs.8 et 10 et pourrait favorablement se retrouver fig.9.

Sur cette fig.6, les fixations au moyeu de rotor et à la pale pourraient être comme sur la fig.5 ; on préfèrera toutefois les réaliser comme sur les figs.8,9 ou 10.

Fig.6, on notera encore que la bague extérieure 13 la plus éloignée de l'axe de la pale pourrait présenter radialement une épaisseur plus importante, telle que e1, vers son extrémité 13a la plus proche de la pale (voir repère 5c), tandis que vers son extrémité 13b la plus proche du moyeu de rotor (voir repère 7) cette épaisseur serait réduite à e2.

Ainsi, cette bague 13 pourrait avoir une surface périphérique extérieure 13c ayant une génératrice non parallèle, ou non continuant parallèle, à l'axe de la pale. En traits fantômes, on voit paroi 13c de biais par rapport à l'axe de pale. Il pourrait s'agir d'une marche ou d'un épaulement proche de l'extrémité 130a et augmentant l'épaisseur de e2 à e1. De préférence, ce surcroît d'épaisseur radiale serait d'au moins 20%.

Figs.8,9 et 10, les parties constitutives 190a, 190b de la bague intermédiaire 190 sont fixées directement sur le moyeu de rotor 7, tandis que les bagues extérieure 13 et intérieure 151, monoblocs, sont fixées à la pale de rotor 5c, par l'intermédiaire d'une pièce de liaison 23.

Suivant une direction générale parallèle à l'axe 50c, la pièce de liaison 23 assure, ici vis-à-vis de la pale 5c, la fixation directe à cette pale de la bague intérieure 151, via les moyens de fixation 25, tandis que la fixation à la pale de la bague extérieure 13 n'est qu'indirecte, puisqu'elle est fixée sur la pièce de liaison 23 (et non sur la pale), par les moyens de fixation 27. Ces fixations assurent donc, via la pièce 23, au moins un passage d'efforts commun aux deux bagues 13, 151.

Radialement (direction 21), la première bague 13 se trouve au-delà de la pale. Ainsi, ses moyens axiaux de fixation 27, ici des boulons, débouchent sur l'extérieur, à deux extrémités axiales opposées de la bague, et sont ici aisément accessibles, soit par la tête à pans de serrage 27a, soit par l'écrou.

Les moyens de fixation 25, qui sont donc situés à un diamètre inférieur, comprennent également chacun une tige filetée accessible depuis son extrémité de serrage qui porte ici un écrou 25b et qui débouche face au volume intérieur creux 31 du moyeu de rotor 7.

On constate que ce volume 31 communique axialement avec le volume intérieur creux 500c de la pale ici figurée, via les volumes intérieurs intermédiaires successivement de la bague intérieure 151 et de la pièce de liaison 23 interposée, parallèlement à l'axe 50c, entre les bagues 13, 151 et la pale contre laquelle cette pièce vient en appui.

A son autre extrémité axiale, la tige filetée 25 est vissée dans le corps de la pale.

Entre ces extrémités, la tige 25, sur sa partie non filetée, traverse la seconde bague 151 et la pièce de liaison 23.

Quant aux moyens 29 de fixation de la première bague 190, ils débouchent, à une extrémité, dans le volume 31 (écrou 29b) et, à l'autre (tête de tige à pans 29a), dans une chambre intérieure 33 limitée radialement par les parois respectivement extérieure et intérieure, cylindriques des deux bagues 13,151 et, axialement, à un bout par la paroi plane de la partie de bague 190b où s'appuie la tête 29a, et à l'autre bout par une surface concave 230 de la pièce de liaison 23.

L'extrémité de serrage du boulon 29, qui débouche en 33, y est bloquée en rotation par des excroissances de retenue 35 fixées à la partie 190a ou à- la pièce de liaison 23.

Ainsi, la bague 190 est fixée sur le moyeu 7 et son serrage, ici parallèle à l'axe 50c, peut s'opérer depuis le volume intérieur 31.

Figures 8 à 10, on note encore que la surface périphérique extérieure 13a de la bague extérieure 13 est retenue au moins radialement à l'axe 50c par un élément de retenue 231 lié mécaniquement à la pièce de liaison 23, pour contrer un effort radial F tentant à écarter entre elles certaines au moins desdites bagues et/ou à dévier en particulier la bague 13, lors de la rotation de la pale ou, plus généralement, lors du fonctionnement de l'éolienne.

Ici, la partie de retenue 231 est intimement liée à la pièce de liaison 23 à laquelle est intégrée et qu'elle prolonge à la manière d'un épaulement sur lequel s'appuie radialement la surface périphérique 13a.

En alternative éventuelle, on pourrait aussi imager, dans une solution a priori dégradée, que le moyeu de rotor 7 présenterait une excroissance radiale 71 pourvue d'un épaulement 700 venant en appui radial contre ladite surface extérieure 13a, vers son extrémité la plus proche du moyeu.

Eventuellement, cet épaulement 700 pourrait même appartenir à une pièce de liaison 800 (traits fantômes figure 8) interposée entre le moyeu 7 et la bague 190 et que traverseraient les moyens 29 pour se fixer dans le moyeu.

Entre la bague intermédiaire 190 et respectivement les bagues extrêmes 13, 151, se situent les séries précitées de roulements tonneaux. On ne voit que leurs emplacements de réception.

Etant donné que c'est fig.9 que le diamètre de pale est le plus réduit, on y a prévu une disposition comme sur la fig.5 des quatre roulements illustrés, tandis qu'ailleurs, c'est la solution a priori plus solide de la fig.6 qui est préférée.

Figure 9, pour sa liaison avec la pale, la pièce de liaison 23 présente, en regard du volume intérieur 150 de la bague 151, une partie pleine 233 pourvue d'orifices 41 situés à une distance radiale de l'axe 50c inférieure à toutes les distances précitées. Ces orifices sont chacun traversés par l'un parmi plusieurs quatrièmes moyens de fixation 43 venant fixer, seule, la pièce annulaire de liaison 23 directement à la pale 5c, tandis que tant la bague extérieure 13 que la seconde bague 151 sont fixées chacune uniquement à cette pièce de liaison 23, à deux distances radiales différentes.

Ces moyens de fixation 43, ici à nouveau des vis, débouchent d'un côté face au volume 150 et sont vissés de l'autre dans l'emplanture de la pale.

Ainsi, les efforts transitant par les deux bagues extrêmes 13, 151 vont passer dans la pièce de liaison 23 et être transmis à la pale 5c par ces moyens 43.

Figure 10, dans une version où le diamètre des pales, et en particulier de la pale 5c, est plus important que fig. 8, la fixation à cette pale à travers la pièce de liaison 23 s'opère avec la bague extérieure 13, en remplacement de la bague intérieure 151.

Pour une fixation parallèle à l'axe 50c, on ainsi en quelque sorte intervertit les moyens de fixation 25 et 27.

Dans les versions privilégiées des figs. 8 à 10, la pièce 23 et les bagues 13, 151 ne sont pas taraudées.

Ces solutions à trois bagues concentriques sont parfaites pour les grosses éoliennes.
Des applications éventuelles de toutes ou parties des solutions ici proposées pourraient en outre être envisagées en particulier pour des grues de grandes dimensions. D'autres applications sur de grosses installations, type tunnelier ou à grande tourelle supportant des efforts importants, sont envisageables.

## Revendications

1. Palier pivotant de servomoteur pour une pale d'un moyeu de rotor d'éolienne, la pale présentant un axe et le palier comprenant :
- une première et une seconde bagues de roulement (13, 15, 19, 131, 151, 190) s'étendant à deux distances radiales différentes par rapport à l'axe (50c) de la pale, pour tourner de façon relative entre elles autour de cet axe,
- au moins deux séries de roulements (11a, 11b, 110a, 110b, 111a, 111b) à surfaces de portée convexes coopérant avec celles, concaves, des pistes (60b,60c,80a,80b) de réception de ces roulements, étagées à deux niveaux différents suivant une direction parallèle à l'axe (50c), lesquels roulements de chacune des séries de roulement étant disposés, suivant un plan radial à l'axe (50c) de la pale, entre les première et seconde bagues,
- des premiers moyens (27) de fixation de la première bague (13, 131) sur le moyeu de rotor,
- des deuxièmes moyens (25) de fixation de la deuxième bague (15, 151) sur la pale (5c),
- l'une au moins des bagues étant séparée en au moins deux parties (15a, 15b, 131a, 131b) suivant une surface transversale à l'axe de la pale, pour le montage et/ou le démontage des roulements,
**caractérisé en ce que** ladite au moins deux séries de roulements sont des séries de roulements tonneaux (11a, 11b, 110a, 110b, 111a, 111b) et les axes de rotation (112a, 112b) des au moins deux séries de roulements sont concourants entre les étages, lesquels roulements présentent chacun:
- un axe de rotation (112a, 112b...) orienté en permanence de biais (i) par rapport à l'axe (50c) de la pale,
- et, suivant cet axe de rotation, une longueur (L) entre deux extrémités planes dudit roulement.

2. Palier selon la revendication 1, caractérisé en que l'angle commun d'inclinaison (i) des axes de rotation desdits roulements par rapport à une parallèle à l'axe (50c) de la pale est compris entre 15° et 70°.

3. Palier selon la revendication 1 ou 2, caractérisé en que les surfaces de portée concaves des pistes de roulement sont toroïdales, asphériques.

4. Palier selon l'une des revendications précédentes, **caractérisé en ce que** lesdites surfaces concaves de réception des roulements tonneaux sont des tores.

5. Palier selon la revendication 1, **caractérisé en ce que**, suivant des directions parallèles à l'axe de la pale :
- la séparation entre les deux parties (15a, 15b, 131a, 131b) de la bague considérée est située entre les deux étages des séries de roulements,
- la bague (15) en au moins deux parties présente, respectivement sur l'une et l'autre de ces parties (15a, 15b, 131a, 131b), des premier et second épaulements radiaux (6b, 6c) de maintien pour les deux séries correspondantes de roulements, ces épaulements présentant chacun, suivant une section contenant l'axe de la pale et passant par un desdits roulements à chaque étage, une dite surface de portée concave (60b, 60c) coopérant avec ladite surface convexe de ces roulements, ces premier et second épaulements se raccordant à une partie centrale amincie (6a) où se situe la séparation (4) en deux parties de la bague, entre les deux étages desdites séries de roulements,
- et l'autre bague (13) présente, entre (les) deux étages des séries de roulements (110a, 110b, 111a, 111b), un troisième épaulement intermédiaire radial (8a) présentant, suivant ladite section passant, deux dites surfaces de portée concaves (80a,80b) coopérant avec ladite surface convexe de ces roulements, pour compléter leur maintien.

6. Palier selon la revendication 1 et la revendication 5, caractérisé en que lesdits axes de rotation concourants se croisent en une zone de la partie intermédiaire de moindre épaisseur (8a) de ladite bague séparée en au moins deux parties (15a, 15b, 131a, 131b).

7. Palier selon l'une quelconque des revendications précédentes, **caractérisé en ce que** les première et deuxième bagues sont fixées directement sur, ou dans, l'une le moyeu de rotor et l'autre la pale.

8. Palier selon l'une quelconque des revendications précédentes, **caractérisé en ce que** :
- radialement à l'axe (50c) de la pale, la deuxième bague présente un diamètre extérieur inférieur au diamètre intérieur de la première bague,
- ladite deuxième bague (15) est celle qui est séparée en au moins deux parties (15a, 15b),
- cette deuxième bague est fixée sur la pale (5c), par l'intermédiaire de seconds moyens de fixation (25) traversant lesdites au moins deux parties de la bague,
- la première bague (13) est fixée sur le moyeu par des premiers moyens (27) de fixation situés à une distance radiale de l'axe de la pale supérieure à celle desdits seconds moyens de fixation,
- et les axes de rotation des deux séries de roulements tonneaux sont concourants vers la seconde bague (15).

9. Palier selon l'une quelconque des revendications précédentes, **caractérisé en ce qu'**il comprend en outre :
- une bague additionnelle de roulement (15,151;13,131) située, radialement à l'axe de la pale, à l'intérieur ou autour des première et deuxième bagues de roulement, cette bague additionnelle de roulement étant fixée au moyeu de rotor (70),
- et une partie de liaison (23) interposée entre le moyeu de rotor (70), auquel cette partie de liaison est liée, et à la fois cette autre bague et ladite première bague (13,131 ou 15,151), et s'étendant, radialement à l'axe de la pale, en regard d'elles, lesdites bague additionnelle et première bague étant fixées ensemble sur cette partie de liaison (23).

10. Palier selon la revendication 9, **caractérisé en ce que** :
- lesdites première bague (13,131 ou 15,151) et bague additionnelle sont fixées ensemble sur la partie de liaison (51) par les premiers moyens de fixation (27,49) et des troisièmes moyens de fixation (49,27), respectivement, et
- les premiers et seconds moyens de fixation (27, 53) sont disposés, ensemble, respectivement sur les première et seconde bagues (13, 131, 19, 190), à une distance radiale par rapport à l'axe de la pale qui est différente de celle qui sépare de cet axe lesdits troisièmes moyens de fixation (49,27).

11. Palier selon la revendication 9 ou 10, **caractérisé en ce que**:
- le moyeu de rotor (70) présente un axe parallèle à celui de la pale,
- et, suivant une section radiale parallèle à l'axe du moyeu, ladite partie de liaison (51) définit un prolongement en T intégré au moyeu de rotor et dont la barre (51a, 51b) reçoit les fixations entre cette partie de liaison et d'une part la première bague (13,190) et d'autre part ladite bague additionnelle de roulement (15, 131, 151) .

12. Palier selon l'une quelconque des revendications 1 à 8, **caractérisé en ce qu'**il comprend en outre :
- une bague additionnelle de roulement (151 ou 13) située, radialement à l'axe de la pale, à l'intérieur ou autour des première et deuxième bagues de roulement, cette bague additionnelle de roulement étant fixée à la pale (5c), et
- une pièce de liaison (23) interposée entre la pale et lesdites bague additionnelle et deuxième bague (13,151), et s'étendant, suivant une direction radiale à l'axe de la pale, en regard de ces bague additionnelle et seconde bague, dont l'une au moins est fixée sur cette pièce de liaison (23) sans être fixée sur la pale (5c) à laquelle elle est toutefois liée par l'intermédiaire de cette pièce de liaison.

13. Palier selon la revendication 12, **caractérisé en ce que**, suivant un plan radial à l'axe de la pale, lesdites bague additionnelle et deuxième bague (13,151) et la pale (5c) sont liées ensemble par une liaison unique (25, 43) par laquelle passe une partie au moins des efforts s'exerçant à la fois sur ces bague additionnelle et deuxième bague, et qui n'est donc propre à aucune de ces bagues.

14. Palier selon l'une quelconque des revendications 9 ou 12, **caractérisé en ce qu'**il comprend en outre un élément ou une partie de retenue (231, 700) qui est lié mécaniquement à la pièce de liaison (23,800) ou au moyeu de rotor (7, 70), en étant retenu au moins radialement à l'axe de la pale par l'un ou l'autre, et qui, suivant une direction radiale à cet axe de pale, borde une surface périphérique extérieure (13a) de celle parmi lesdites bagues qui est radialement la plus éloignée de l'axe de la pale, pour contrer un effort radial tendant à écarter entre elles certaines au moins desdites bagues et/ou à dévier cette bague (13, 131) radialement la plus éloignée de l'axe de la pale, lors de la rotation de la pale.

15. Palier selon l'une quelconque des revendications 1 à 13, **caractérisé en ce que** celle parmi lesdites bagues (13, 131), qui est radialement la plus éloignée de l'axe de la pale, présente radialement une épaisseur (e1) plus importante vers son extrémité la plus proche de la pale que vers son extrémité la plus proche du moyeu de rotor, cette bague présentant en conséquence une surface périphérique extérieure (13c) ayant une génératrice non parallèle ou non continûment parallèle à l'axe de la pale.

16. Eolienne comprenant au moins un palier selon l'une quelconque des revendications précédentes, interposé entre, et lié à, une pale et un moyeu rotor de cette éolienne.

## Patentansprüche

1. Schwenklager für einen Servomotor für eine Schaufel für eine Nabe eines Windturbinenrotors, wobei die Schaufel eine Achse aufweist und das Lager Folgendes umfasst:
- einen ersten und einen zweiten Laufring (13, 15, 19, 131, 151, 190), die sich in zwei verschiedenen radialen Abständen zur Achse (50c) der Schaufel erstrecken, so dass sie sich relativ zueinander um diese Achse drehen,
- mindestens zwei Reihen von Wälzkörpern (11a, 11b, 110a, 110b, 111a, 111b) mit konvexen Anlageflächen, die mit den konkaven Anlageflächen der Laufflächen (60b, 60c, 80a, 80b), die diese Wälzkörper aufnehmen, zusammenwirken, die auf zwei verschiedenen Ebenen in einer zur Achse (50c) parallelen Richtung gestuft sind, wobei die Wälzkörper jeder Reihe von Wälzkörpern in einer zur Achse (50c) der Schaufel radialen Ebene zwischen dem ersten und dem zweiten Ring angeordnet sind,
- erste Mittel (27) zur Befestigung des ersten Rings (13, 131) an der Rotornabe,
- zweite Mittel (25) zur Befestigung des zweiten Rings (15, 151) an der Schaufel (5c),
- wobei mindestens einer der Ringe entlang einer quer zur Achse der Schaufel verlaufenden Fläche zur Befestigung und/oder Entfernung der Wälzkörper in mindestens zwei Teile (15a, 15b, 131a, 131b) unterteilt ist,
**dadurch gekennzeichnet, dass** die mindestens zwei Reihen von Wälzkörpern Reihen von Tonnenwälzkörpern (11a, 11b, 110a, 110b, 111a, 111b) sind und die Drehachsen (112a, 112b) der mindestens zwei Reihen von Wälzkörpern zwischen den Stufen zusammenlaufen, wobei die Wälzkörper jeweils Folgendes aufweisen:
- eine Drehachse (112a, 112b...), die permanent schräg (i) zur Achse (50c) der Schaufel ausgerichtet ist,
- und, entlang dieser Drehachse, eine Länge (L) zwischen den beiden planaren Enden des Wälzkörpers.

2. Lager nach Anspruch 1, **dadurch gekennzeichnet, dass** der gemeinsame Neigungswinkel (i) der Drehachsen der Wälzkörper zu einer Parallelen zur Achse (50c) der Schaufel zwischen 15° und 70° liegt.

3. Lager nach Anspruch 1 oder 2, **dadurch gekennzeichnet, dass** die konkaven Anlageflächen der Laufflächen torisch, asphärisch sind.

4. Lager nach einem der vorhergehenden Ansprüche, **dadurch gekennzeichnet, dass** die die Tonnenwälzkörper aufnehmenden konkaven Flächen Tori sind.

5. Lager nach Anspruch 1, **dadurch gekennzeichnet, dass** in zur Achse der Schaufel parallelen Richtungen:
- sich die Trennung zwischen den beiden Teilen (15a, 15b, 131a, 131b) des relevanten Rings zwischen den beiden Stufen der Reihen von Wälzkörpern befindet,
- der aus mindestens zwei Teilen bestehende Ring (15) auf dem einen und dem anderen dieser Teile (15a, 15b, 131a, 131b) eine erste bzw. eine zweite radiale Schulter (6b, 6c) zum Halten der entsprechenden beiden Reihen von Wälzkörpern aufweist, wobei die Schultern jeweils in einem Querschnitt, der die Achse der Schaufel umfasst und durch einen der Wälzkörper in jeder Stufe verläuft, eine konkave Anlagefläche (60b, 60c) aufweisen, die mit der konvexen Fläche der Wälzkörper zusammenwirkt, wobei die erste und die zweite Schulter dort, wo sich die Unterteilung (4) des Rings in zwei Teile befindet, zwischen den beiden Stufen der Reihen von Wälzkörpern mit einem dünneren mittleren Teil (6a) verbunden sind,
- und der andere Ring (13) zwischen (den beiden) zwei Stufen der Reihen von Wälzkörpern (110a, 110b, 111a, 111b) eine dritte radiale Zwischenschulter (8a) aufweist, die in dem durchgehenden Querschnitt zwei konkave Anlageflächen (80a, 80b) aufweist, die dahingehend mit der konvexen Fläche der Wälzkörper zusammenwirken, deren Halterung zu gewährleisten.

6. Lager nach Anspruch 1 und Anspruch 5, **dadurch gekennzeichnet, dass** sich die zusammenlaufenden Drehachsen in einem Bereich des eine geringere Dicke aufweisenden Zwischenteils (8a) des Rings, der in mindestens zwei Teile (15a, 15b, 131a, 131b) unterteilt ist, kreuzen.

7. Lager nach einem der vorhergehenden Ansprüche, **dadurch gekennzeichnet, dass** einer des ersten und des zweiten Rings direkt an oder in der Rotornabe und der andere direkt an oder in der Schaufel fixiert ist.

8. Lager nach einem der vorhergehenden Ansprüche, **dadurch gekennzeichnet, dass**:
- der zweite Ring radial zur Achse (50c) der Schaufel einen Außendurchmesser aufweist, der kleiner als der Innendurchmesser des ersten Rings ist,
- der zweite Ring (15) der ist, der in mindestens zwei Teile (15a, 15b) unterteilt ist,
- dieser zweite Ring durch zweite Befestigungsmittel (25), die durch die mindestens zwei Teile des Rings hindurchgehen, an der Schaufel (5c) fixiert ist,
- der erste Ring (13) durch erste Befestigungsmittel (27), die sich in einem radialen Abstand zur Achse der Schaufel, der größer als der der zweiten Befestigungsmittel ist, an der Nabe fixiert ist,
- und die Drehachsen der beiden Reihen von Tonnenwälzkörpern zum zweiten Ring (15) hin zusammenlaufen.

9. Lager nach einem der vorhergehenden Ansprüche, **dadurch gekennzeichnet, dass** es ferner Folgendes umfasst:
- einen zusätzlichen Laufring (15, 151; 13, 131), der sich radial zur Achse der Schaufel innerhalb des ersten und des zweiten Laufrings oder um diese herum befindet, wobei dieser zusätzliche Laufring an der Rotornabe (70) fixiert ist,
- einen Verbindungsteil (23), der zwischen der Rotornabe (70), mit der dieser Verbindungsteil verbunden ist, und sowohl dem anderen Ring als auch dem ersten Ring (13, 131 oder 15, 151) angeordnet ist und sich radial zur Achse der Schaufel zu ihnen weisend erstreckt, wobei der zusätzliche Ring und der erste Ring gemeinsam an diesem Verbindungsteil (23) fixiert sind.

10. Lager nach Anspruch 9, **dadurch gekennzeichnet, dass**:
- der erste Ring (13, 131 oder 15, 151) und der zusätzliche Ring durch die ersten Befestigungsmittel (27, 49) bzw. die dritten Befestigungsmittel (49, 27) zusammen an dem Verbindungsteil (51) fixiert sind und
- die ersten und die zweiten Befestigungsmittel (27, 53) in einem radialen Abstand zur Achse der Schaufel, der von dem, der diese Achse von den dritten Befestigungsmitteln (49, 27) trennt, verschieden ist, auf dem ersten bzw. dem zweiten Ring (13, 131, 19, 190) zusammen angeordnet sind.

11. Lager nach Anspruch 9 oder 10, **dadurch gekennzeichnet, dass**:
- die Rotornabe (70) eine Achse, die zu der der Schaufel parallel ist, aufweist,
- und der Verbindungsteil (51) in einem Radialschnitt parallel zur Achse der Nabe eine T-förmige Verlängerung definiert, die in die Rotornabe integriert ist und an deren Querbalken (51a, 51b) die Befestigungen zwischen diesem Verbindungsteil und einerseits dem ersten Ring (13, 190) und andererseits dem zusätzlichen Laufring (15, 131, 151) aufgenommen sind.

12. Lager nach einem der Ansprüche 1-8, **dadurch gekennzeichnet, dass** es ferner Folgendes umfasst:
- einen zusätzlichen Laufring (151 oder 13), der sich radial zur Achse der Schaufel im Inneren des ersten und des zweiten Laufrings oder um diese herum befindet, wobei dieser zusätzliche Laufring an der Schaufel (5c) fixiert ist, und
- ein Verbindungsstück (23), das zwischen der Schaufel und dem zusätzlichen Ring und dem zweiten Ring (13, 151) angeordnet ist und sich in einer radial zur Achse der Schaufel verlaufenden Richtung zu dem zusätzlichen Ring und dem zweiten Ring weisend erstreckt, von denen mindestens einer an diesem Verbindungsstück (23) fixiert ist, ohne an der Schaufel (5c) fixiert zu sein, mit der er trotzdem durch dieses Verbindungsstück verbunden ist.

13. Lager nach Anspruch 12, **dadurch gekennzeichnet, dass** der zusätzliche Ring und der zweite Ring (13, 151) und die Schaufel (5c) in einer zur Achse der Schaufel radial verlaufenden Ebene durch eine einzige Verbindung (25, 43) miteinander verbunden sind, durch die mindestens ein Teil der Kräfte, die sowohl auf den zusätzlichen Ring als auch den zweiten Ring ausgeübt werden, hindurchgeht und die somit keinem der Ringe ausschließlich zugeordnet ist.

14. Lager nach einem der Ansprüche 9 oder 12, **dadurch gekennzeichnet, dass** es ferner ein Halteelement oder einen Halteteil (231, 700) umfasst, das bzw. der mit dem Verbindungsstück (23, 800) oder der Rotornabe (7, 70) mechanisch verbunden ist,
während es bzw. er zumindest radial zur Achse der Schaufel von dem einen oder dem anderen gehalten wird, und das bzw. der in einer zu dieser Achse der Schaufel radial verlaufenden Richtung an eine Außenumfangsfläche (13a) desjenigen der Ringe, der sich radial am weitesten von der Achse der Schaufel weg befindet, angrenzt, um einer radialen Kraft, die tendenziell zumindest einige der Ringe auseinanderbewegt und/oder diesen Ring (13, 131),
der sich radial am weitesten von der Achse der Schaufel weg befindet, bei Drehung der Schaufel auslenkt, entgegenzuwirken.

15. Lager nach einem der Ansprüche 1 bis 13, **dadurch gekennzeichnet, dass** der unter den Ringen (13, 131), der sich radial am weitesten von der Achse der Schaufel weg befindet, radial eine Dicke (e1) aufweist, die zu seinem Ende, das sich zu der Schaufel am nächsten befindet, hin größer ist als zu seinem Ende, das sich zu der Rotornabe am nächsten befindet, hin, wobei dieser Ring somit eine Außenumfangsfläche (13c) aufweist, die eine Generatrix aufweist, die zur Achse der Schaufel nicht parallel oder nicht durchgängig parallel ist.

16. Windturbine, die mindestens ein Lager nach einem der vorhergehenden Ansprüche umfasst, das zwischen einer Schaufel und einer Rotornabe dieser Windturbine angeordnet und mit diesen verbunden ist.

## Claims

1. Pivoting bearing for a servomotor for a blade for a hub of a rotor of a wind generator, the blade having an axis and the bearing comprising:
- a first and a second bearing race (13, 15, 19, 131, 151, 190) extending at two different radial distances away from the axis (50c) of the blade, so as to rotate relative to one another about this axis,
- at least two series of rolling bodies (11a, 11b, 110a, 110b, 111a, 111b) with convex bearing surfaces collaborating with the concave bearing surfaces of the raceways (60b, 60c, 80a, 80b) that house these rolling bodies, which are stepped at two different levels in a direction parallel to the axis (50c), which rolling bodies of each of the series of rolling bodies being arranged, in a plane radial to the axis (50c) of the blade, between the first and second races,
- first means (27) of fixing the first race (13, 131) to the rotor hub,
- second means (25) of fixing the second race (15, 151) to the blade (5c),
- at least one of the races being divided into at least two parts (15a, 15b, 131a, 131b) along a surface transverse to the axis of the blade, so that the rolling bodies can be fitted and/or removed, **characterized in that** the said at least two series of rolling bodies are series of barrel-shaped rolling bodies (11a, 11b, 110a, 110b, 111a, 111b) and the axes of rotation (112a, 112b) of the at least two series of rolling bodies are concurrent between the stages, which rolling bodies each have:
- an axis of rotation (112a, 112b...) permanently oriented at an angle (i) with respect to the axis (50c) of the blade,
- and, along this axis of rotation, a length (L) between two planar ends of the said rolling body.

2. Bearing according to Claim 1, **characterized in that** the common angle of inclination (i) of the axes of rotation of the said rolling bodies with respect to a parallel to the axis (50c) of the blade is between 15° and 70°.

3. Bearing according to Claim 1 or 2, **characterized in that** the concave bearing surfaces of the raceways are toroidal, aspherical.

4. Bearing according to one of the preceding claims, **characterized in that** the said concave surfaces housing the barrel-shaped rolling bodies are toric.

5. Bearing according to Claim 1, **characterized in that**, in directions parallel to the axis of the blade:
- the division between the two parts (15a, 15b, 131a, 131b) of the relevant race is situated between the two stages of the series of rolling bodies,
- the race (15) made in at least two parts has, on either one of these parts (15a, 15b, 131a, 131b) respectively, first and second radial shoulders (6b, 6c) for retaining the corresponding two series of rolling bodies, these shoulders each having, in a cross section containing the axis of the blade and passing through one of the said rolling bodies in each stage, a said concave bearing surface (60b, 60c) collaborating with the said convex surface of these rolling bodies, these first and second shoulders connecting to a thinner central part (6a) where the division (4) of the race into two parts is situated, between the two stages of the said series of rolling bodies,
- and the other race (13) has, between (the) two stages of the series of rolling bodies (110a, 110b, 111a, 111b), a third intermediate radial shoulder (8a) which, in the said through-section, has two said concave bearing surfaces (80a, 80b) collaborating with the said convex surface of these rolling bodies to complete the retention thereof.

6. Bearing according to Claim 1 and Claim 5, **characterized in that** the said concurrent axes of rotation intersect in a region of the lesser-thickness intermediate part (8a) of the said race that is divided into at least two parts (15a, 15b, 131a, 131b).

7. Bearing according to any one of the preceding claims, **characterized in that** one of the first and second races is fixed directly onto or into the rotor hub and the other is fixed directly onto or into the pale.

8. Bearing according to any one of the preceding claims, **characterized in that**:
- radially to the axis (50c) of the blade, the second race has an outside diameter smaller than the inside diameter of the first race,
- the said second race (15) is the one that is divided into at least two parts (15a, 15b),
- this second race is fixed to the blade (5c) via second fixing means (25) that pass through the said at least two parts of the race,
- the first race (13) is fixed to the hub by first fixing means (27) situated at a radial distance from the axis of the blade that is greater than that of the said second fixing means,
- and the axes of rotation of the two series of barrel-shaped rolling bodies are concurrent towards the second race (15).

9. Bearing according to any one of the preceding claims, **characterized in that** it further comprises:
- an additional bearing race (15, 151; 13, 131) situated, radially to the axis of the blade, inside or around the first and second bearing races, this additional bearing race being fixed to the rotor hub (70),
- and a connecting part (23) interposed between the rotor hub (70), to which this connecting part is connected, and both this other race and the said first race (13, 131 or 15, 151) and extending, radially to the axis of the blade, to face these races, the said additional race and first race being fixed together on this connecting part (23).

10. Bearing according to Claim 9, **characterized in that**:
- the said first race (13, 131 or 15, 151) and additional race are fixed together on the connecting part (51) by the first fixing means (27, 49) and third fixing means (49, 27), respectively, and
- the first and second fixing means (27, 53) are together arranged respectively on the first and second races (13, 131, 19, 190) at a radial distance with respect to the axis of the blade which is different from that separating the said third fixing means (49, 27) from this axis.

11. Bearing according to Claim 9 or 10, **characterized in that**:
- the rotor hub (70) has an axis parallel to that of the blade,
- and, in a radial section parallel to the axis of the hub, the said connecting part (51) defines a T-shaped extension incorporated into the rotor hub and the crossbar (51a, 51b) of which takes the fixings between this connecting part and, on the one hand, the first race (13, 190) and, on the other hand, the said additional bearing race (15, 131, 151).

12. Bearing according to any one of Claims 1 to 8, **characterized in that** it further comprises:
- an additional bearing race (151 or 13) situated, radially to the axis of the blade, inside or around the first and second bearing races, this additional bearing race being fixed to the blade (5c), and
- a connecting piece (23) interposed between the blade and the said additional race and second race (13, 151) and extending, in a direction radial to the axis of the blade, facing this additional race and this second race, at least one of which is fixed to this connecting piece (23) without being fixed to the blade (5c) to which it is nevertheless connected via this connecting piece.

13. Bearing according to Claim 12, **characterized in that**, in a plane radial to the axis of the blade, the said additional race and second race (13, 151) and the blade (5c) are connected to one another by a single connection (25, 43) through which at least some of the load applied both to this additional race and this second race passes, and which is therefore not specific to either one of these races.

14. Bearing according to either one of Claims 9 and 12, **characterized in that** it further comprises a retaining element or part (231, 700) which is mechanically connected to the connecting piece (23, 800) or to the rotor hub (7, 70) while being retained at least radially to the axis of the blade by the one or the other and which, in a direction radial to this blade axis, borders an exterior peripheral surface (13a) of that one of the said races which is radially furthest away from the axis of the blade so as to counter a radial force tending to move at least some of the said races apart and/or to deflect this race (13, 131) that is radially furthest away from the axis of the blade, as the blade rotates.

15. Bearing according to any one of Claims 1 to 13, **characterized in that** the one of the said races (13, 131) that is radially furthest away from the axis of the blade has radially a thickness (e1) that is greater towards its end closest to the blade than towards its end closest to the rotor hub, this race therefore having an exterior peripheral surface (13c) that has a generatrix that is not parallel to or not continuously parallel to the axis of the blade.

16. Wind generator comprising at least one bearing according to any one of the preceding claims, interposed between, and connected to, a blade and a rotor hub of this wind generator.
